(19) Europäisches Patentamt
European Patent Office
Office européen des brevets

(11) Publication number: 0 135 982 A1

(12) EUROPEAN PATENT APPLICATION

(21) Application number: 84304021.3

(22) Date of filing: 14.06.84

(51) Int. Cl.⁴: C 08 J 7/04, C 08 J 5/18, G 11 B 5/704, C 09 D 3/72

(30) Priority: 26.07.83 JP 135203/83

(43) Date of publication of application: 03.04.85 Bulletin 85/14

(84) Designated Contracting States: DE GB NL

(71) Applicant: TEIJIN LIMITED, 11 Minami Honmachi 1-chome Higashi-ku, Osaka-shi Osaka-fu (JP)

(72) Inventor: Miura, Rikuo, 8-14-26, Higashirinkan, Sagamihara-shi Kanagawa-ken (JP)
Inventor: Miura, Sadayoshi, 3316-6, Fukuda, Yamato-shi Kanagawa-ken (JP)
Inventor: Kanai, Tamaki, 2-15-4, Sakuradai 1-chome, Oyamada Machida-shi Tokyo (JP)

(74) Representative: Myerscough, Philip Boyd et al, J.A.Kemp & Co. 14, South Square Gray's Inn, London, WC1R 5EU (GB)

# (54) Easily slippable aromatic polyester film and process for production thereof.

(57) A process for producing an easily slippable film of an aromatic polyester, which comprises applying in a thin film form an aqueous dispersion or emulsion composition containing a self-crosslinkable polyurethane, a pulverulent surface-roughening substance having an average particle diameter of not more than about 1 micron and as required, a lubricant substance to at least one surface of an aromatic polyester film before the desired crystalline orientation of the polyester film is achieved, thereafter stretching and heat-treating the aromatic polyester having the above composition in thin film form to impart the desired crystalline orientation to the aromatic polyester film and to crosslink the self-crosslinkable polyurethane in the composition present on the surface of the aromatic polyester film, thereby to form a cured thin film having numerous minute protrusions on at least one surface of the crystalline-oriented aromatic polyester film.

EP 0 135 982 A1

DESCRIPTION

EASILY SLIPPABLE AROMATIC POLYESTER FILM AND PROCESS FOR PRODUCTION THEREOF

This invention relates to an easily slippable polyester film having formed on its surface a thin film with numerous fine protrusions.

Because of their excellent mechanical properties, heat resistance and chemical resistance, aromatic polyester films, particularly biaxially oriented films of polyethylene terephthalate, have recently been in great demand as a material for magnetic tapes, photographic films, packaging films, metallizing films for condensers, electrical insulating films, etc.

It is necessary to improve the slipperiness of such polyester films in order to produce such polyester films smoothly and apply them effectively to the aforesaid usages. It is particularly so with a thin polyester film. The lack of slipperiness in such a thin polyester film causes serious troubles to various operations in the production of films and magnetic tapes such as winding, unwinding, coating of a magnetic layer, and slitting. For example, winding creases form, or the film gathers dirt and dust by static charges generated.

One means of improving the slipperiness of a polyester film is based on the utilization of the fact that when a polyester containing various minute particles such as silicon oxide, kaolin, talc, calcium carbonate or alumina is molded into a film and then biaxially stretched, the thickness of the film is reduced and the minute particles appear as minute protrusions on the film surface (see Japanese Patent Publication No. 23888/1968).

Likewise, a method which comprises converting a catalyst used in the production of a polyester into particles insoluble in the polymer is also known as a technique of improving the slipperiness of the polyester film by utilizing minute protrusions (see Japanese Patent

Publications Nos. 13386/1968, 32116/1975 and 29496/1982).

These techniques have in fact been successful to some extent in improving the slipperiness of polyester films. Since, however, minute particles exist within the films, the transparency of the films is reduced or voids are formed in the films. These problems are still desired to be solved. The reduction of transparency and the formation of voids exert deleterious effects on polyester films used as diazo films, metallizing films, photographic films, magnetic tapes and the like. Furthermore, magnetic video tapes which have recently showed an increasing demand are required to have excellent electromagnetic characteristics in order to prevent the occurrence of undesirable phenomena such as dropout (loss of records) and color noises. As a material for such magnetic video tapes, the use of a polyester film having minute protrusions based on minute particles on both surfaces of the film improves the slipperiness of the resulting magnetic video tape. But because the film contains voids, the minute protrusions gradually drop on repeated use to cause frequent dropout or color noises. This is undesirable for the durability of the tape.

In a magnetic tape made from a film having minute protrusions on both surfaces, a magnetic layer is coated on the minute protrusions on one surface. Thus, the effect of the minute protrusions rarely extends to the outside surface of the magnetic layer and the surface of the magnetic layer is relatively smooth. The other surface of the magnetic tape has no magnetic layer, and when the magnetic tape is wound up, the minute protrusions on the other surface are pressed against the relatively flat surface of the magnetic layer and transferred to it. Accordingly, with magnetic tapes made from the aforesaid material, this transfer cannot be completely prevented.

In addition, films obtained by a method involving the formation of minute protrusions frequently have

relatively coarse protrusions based on relatively coarse particles. The presence of such coarse protrusions increases the trouble of transfer. Magnetic tapes having raised and depressed portions attributed to transfer in the magnetic layer develop space losses during contact with the head of video hardware to cause dropout and color noises.

In order to remove this defect caused by the minute protrusions, attempts have been made to decrease the particle diameter of the minute particles. But after all, inhibition of transfer requires the sacrifice of slipperiness.

On the other hand, a method of imparting slipperiness to a film was proposed which comprises coating a specific coating solution on both surfaces of a film prepared from a polyester containing no minute particles, thereby to form a earthworm-like film structure on both surfaces of the film. This method employs a specific coating solution containing a water-soluble high-molecular-weight compound and at least one of a silicone or styrene-butadiene rubber, and differs from the aforesaid method of imparting slipperiness to the film by adding fine particles to the polyester in that the former imparts slipperiness to the film by after-treatment. However, it has the disadvantage that sufficient slipperiness cannot be obtained unless an earthworm-like film structure is formed on both surfaces of the film by applying the coating solution to both surfaces of the film. When the earthworm-like film structure is formed only on one surface of the film, the coefficient of friction between the surface having the earthworm-like film structure and the surface having no such structure is still high, and no sufficient slipperiness can be obtained.

It is an object of this invention therefore to provide a novel easily slippable aromatic polyester film having a thin film layer of a specific composition having many minute protrusions on at least one surface of the

film; and a process for its production.

Another object of this invention is to provide an easily slippable aromatic polyester film having a dual structure, as a preferred embodiment of the easily slippable polyester film of this invention, in which only one surface of the film has a thin film layer of a specific composition having numerous minute protrusions and the other surface of the film does not have such a thin layer and is substantially flat; and a process for producing it.

Still another object of this invention is to provide an easily slippable polyester film which causes little or no transfer that becomes a drawback in such aplications as magnetic tapes; and a process for producing it.

Yet another object of this invention is to produce an easily slippable aromatic polyester film very advantageously in industrial practice by incorporating a step of forming on the surface of an aromatic polyester film a thin film layer of a specific composition having numerous minute protrusions into a process for continuously producing the aromatic polyester film by a series of successive steps of extruding a molten aromatic polyester from a slit to form an unstretched film, biaxially stretching the film and heat-treating the stretched film.

A further object of this invention is to provide an industrial process for producing an easily slippable aromatic polyester film very safely with operational and economic advanages by applying an aqueous composition of specific components and proportions onto the surface of the film and thereby avoiding environmental pollution and hygienically undesirable conditions which might be caused when an organic-solvent containing composition is used.

An additional object of this invention is to provide a magnetic recording film or tape based on an aromatic polyester film which has a thin film layer of a specific composition having numerous minute protrusions on

only one surface of the film and a magnetic layer on the other surface and posesses excellent slipperiness.

Other objects and advantages will become apparent form the following description.

According to this invention, such objects and advantages are achieved by a process for producing an easily slippable aromatic polyester film, which comprises applying in a thin film form an aqueous dispersion or emulsion composition containing a self-crosslinkable polyurethane, a pulverulent surface-roughening substance having an average particle diameter of not more than about 1 micron and as required, a lubricant substance to at least one surface of an aromatic polyester film before the desired crystalline orientation of the polyester film is achieved, thereafter stretching and heat-treating the aromatic polyester having the above composition in thin film form to impart the desired crystalline orientation to the aromatic polyester film and to crosslink the self-crosslinkable polyurethane in the composition present on the sruface of the aromatic polyester film, thereby to form a crosslinked thin film having numerous minute protrusions on at least one surface of the oriented aromatic polyester film.

As stated above, the process of this invention is carried out by applying an aqueous dispersion or emulsion composition containing a self-crosslinkable polyurethane and a pulverulent surface-roughening substance (to be sometimes referred to as a thin film-forming composition) in a thin film form to at least one surface of an aromatic polyester film before its desired crystalline orientation is achieved, and thereafter stretching and heat-treating the aromatic polyester film having the thin film-forming composition formed in a thin film form on the surface.

In the present application, the "film to which the desired crystalline orientation has been imparted" or the "crystallographically oriented film" denotes a film

which has been biaxially stretched and heat-treated and thus oriented crystallographically to the desired extent. On the other hand, the "film which has not attained the desired crystalline orientation" denotes a film which has not been fully biaxially stretched to such an extent that the final desired crystalline orientation is imparted to it when it is heat-treated. Accordingly, the "film which has not attained the crystalline orientation" includes, for example, an unstretched film obtained by melting a polymer and converting it directly into a film form; a monoaxially stretched film obtained by orienting the unstretched film either in the longitudinal direction or in the transverse direction; and a biaxially stretched film which has been stretched longitudinally and transversely but which cannot attain the desired crystalline orientation unless it is further stretched finally in at least one of the longitudinal and transverse directions and heat-treated. These films have not undergone heat-treatment.

Accordingly, the process of this invention, for example, includes the following specific embodiments.

A method which comprises applying the aqueous dispersion or emulsion composition in a thin film form to at least one surface of an unstretched aromatic polyester film, thereafter biaxially stretching the film either simultaneously or successively, and heat-treating the stretched film.

A method which comprises applying the aqueous dispersion or emulsion composition in a thin film form to at least one surface of a monoaxially stretched aromatic polyester film, thereafter stretching the film in a direction substantially at right angles to the monoaxial stretching direction, and heat-treating the stretched film.

A method which comprises applying the aqueous dispersion or emulsion composition in a thin film form to at least one surface of a biaxially stretched aromatic polyester film which has not attained the desired

crystalline orientation, then stretching the film further in at least one direction, and heat-treating the finally stretched film.

When the aromatic polyester film to which the aqueous dispersion or emulsion composition (thin film-forming composition) has been applied in a thin film form is then heat-treated without re-stretching, the aromatic polyester film used in this invention which has attained the desired crystalline orientation, namely to which the "desired crystalline orientation has been imparted" cannot be obtained.

The process of this invention is advantageously carried out by the second embodiment.

The thin film-forming composition applied to the surface of the film in the process of this invention goes through the stretching and heat-treating steps. In these steps, the composition undergoes heating so that water is evaporated from it and the self-crosslinkable polyurethane contained in it is crosslinked (cured). In the stretching step, it is stretched in the stretching directions of the film and expands following the expansion of the film surface. Accordingly, microscopic examination of the resulting cured thin film having numerous minute protrusions sometimes shows that the easily slippable aromatic polyester film obtained by the process of this invention has a striped pattern having some degree of directionality so that, for example, the thin film-forming composition reflects its expanded state in a direction at right angles to the stretching direction in the stretching step before the heat-treatment.

The self-crosslinkable polyurethane used in this invention contains reactive groups in its molecular chains, and by heating or irradiation of energy rays, reaction takes place between the reactive groups to form a crosslinked structure.

The self-crosslinkable polyurethane can be

produced generally by a known method of producing polyurethane by reacting a urethane prepolymer having terminal isocyanate groups produced from a polyhydroxy compound and an excess of a polyfunctional isocyanate, with a chain extender except that at least one of the polyhydroxy compound, the polyfunctional isocyanate and the chain extender contains a reactive group which is to be involved in a crosslinking reaction; or by introducing such a reactive group into polyurethane obained by the known method.

The polyhydroxy compound may be any compounds known to be used for the production of polyurethane. Examples include low-molecular-weight polyols such as ethylene glycol, propylene glycol, tetramethylene glycol, diethylene glycol and neopentyl glycol; polyethers such as homopolymers or copolymers of alkylene oxides such as tetrahydrofuran, ethylene oxide, propylene oxide and butylene oxide, and homopolymers resulting from condensation of alkylene diols such as hexanediol, methylhexanediol, heptanediol and octanediol; hydroxyl-terminated polyesters derived from saturated or unsaturated low-molecular-weight glycols such as ethylene glycol, propylene glycol, 1,4-butanediol, neopentyl glycol, pentanediol, hexanediol, 2,2-bis(4-hydroxyethoxyphenyl)propane, diethylene glycol, triethylene glycol and dipropylene glycol and dicarboxylic acids such as adipic acid, sebacic acid, maleic acid, fumaric acid, itaconic acid, terephthalic acid, isophthalic acid and phthalic acid; polyacetals which are the condensation products of formaldehyde and diols such as hexanediol or 2,2-bis(4-hydroxyethoxyphenyl)-propane; polythioethers such as polyethylene thioether; polybutadiene glycols; and polyester amides. Of these, polyhydroxy compounds haivng a molecular weight of about 150 to about 15,000 or mixtures of these with diols having a lower molecular weight are preferred.

The polyfunctional isocyanate may be any polyisocyanates which are known to be used for the production

of polyurethane. Illustrative of the polyfunctional isocyanate are aliphatic polyisocyanates such as 1,4-butane diisocyanate, 1,6-hexane diisocyanate, 2,2,4- or 2,4,4-trimethylhexamethylene diisocyanate, cyclohexane diisocyanate, 4,4'-diisocyanatodicyclohexylmethane and isophorone diisocyanate and aromatic polyisocyanates such as xylylene diisocyanate, 4,4'-diphenylmethane diisocyanate, 2,2-bis(4-isocyanatophenyl)propane, di- or tetra-alkyldiphenylmethane diisocyanates, 4,4'-dibenzyl diisocyanate, phenylene diisocyanate, naphthylene diisocyanate and tolylene diisocyanate. These polyisocyanates may be used singly or as a mixture of two or more.

Specific examples of the chain extender include low-molecular-weight polyols such as ethylene glycol, propylene glycol, 1,4-butanediol, 1,6-hexanediol, neopentyl glycol, cyclohexanediol, 2,2'-bis(4-hydroxycyclohexyl)-propane, diethylene glycol, dipropylene glycol, glycerol, trimethylolpropane and pentaerythritol; hydrazine; diamines such as ethylenediamine, piperazine and diaminodiphenylmethane; and polyalkylene polyamines, for example polyethylene polyamines such as diethylene triamine, triethylene tetramine and tetraethylene pentamine, polypropylene polyamines such as dipropylene triamine, and polybutylene polyamines such as dibutylene triamine. These chain extenders may be used singly or in combination.

The self-crosslinkable polyurethane used in this invention can be obtained, for example, by using 1,4-butanediol or a polyol having an unsaturated bond, for example a hydroxyl-terminated polyester having an unsaturated carboxylic acid such as maleic acid as at least a part of the polyhydroxy compound; or by using a polyfunctional isocyanate having an unsaturated bond such as the reaction product of the above-exemplified polyol having an unsaturated bond and an excess of a diisocyanate as at least a part of the polyfunctional isocyanate; or by using a compound having at least two primary or secondary amino

groups and $-CH_2CH(OH)CH_2X$ in which X is a halogen atom such as chlorine or bromine in the molecule and being the reaction product of a polyalkylene polyamine with an epihalohydrin as at least a part of the chain extender. In the first and second examples cited above, the unsaturated bond is a functional group which contributes to the crosslinking (curing) reaction, and in the last example, the crosslinking reaction proceeds between the primary or secondary amino groups and the group $-CH_2CH(OH)CH_2X$.

The self-crosslinkable polyurethane used in this invention can be produced by introducing reactive groups which are to be involved in the crosslinking reaction into the resulting polyurethane, for example by a method which comprises forming polyurethane having functional groups such as primary or secondary amino groups using a trifunctional or higher polyalkylene polyamine as at least a part of the chain extender, and reacting part of the functional groups of the polyurethane with an epihalohydrin or a blocked isocyanate having at least one free isocyanate group. In the above example, the groups which are to be involved in the crosslinking reaction are the primary or secondary amino groups and the group $-CH_2CH(OH)CH_2X$ (X is a halogen atom) derived from the epihalohydrin or the blocked isocyanate group.

The aforesaid self-crosslinkable polyurethanes obtained by using polyalkylene polyamines, and the methods of production thereof are disclosed in Japanese Patent Publications Nos. 15027/1975 and 40355/1977 and Japanese Laid-Open Patent Publication No. 15596/1977.

When such a self-crosslinkable polyurethane is treated with an acid, the acid adds to the amino group to give a cationic self-emulsifiable polyurethane capable of being emulsified stably in water without using an emulsifying agent. The acid used may be an inorganic acid such as hydrochloric acid, nitric acid or sulfuric acid or an organic acid such as acetic acid, propionic acid,

monochloroacetic acid or p-toluenesulfonic acid.

Likewise, a self-emulsifiable anionic self-crosslinkable polyurethane can be produced by a method which comprises reacting the aforesaid polyurethane having primary or secondary amino groups and the group $-CH_2CH(OH)CH_2X$ with a cyclic dicarboxylic acid anhydride such as maleic anhydride, succinic anhydride, itaconic anhydride, di-, tetra- or hexahydrophthalic anhydride or trimellitic anhydride to add the anhydride to the amino groups, and thereafter treating the product with a basic substance to convert the resulting carboxyl group to its salt, or by a method which comprises reacting the aforesaid polyurethane having primary or secondary amino groups but being free from the group $-CH_2CH(OH)CH_2X$ with an epihalohydrin, reacting the product with a cyclic dicarboxylic acid anhydride, and treating the product with a basic substance (see Japanese Patent Publication No. 40357/1977 and Japanese Laid-Open Patent Publication No. 112490/1975).

Examples of the basic substances that can be used in the aforesaid methods include alkali metal hydroxides, carbonates and bicarbonates, ammonia, and primary, secondary or tertiary amines in which each of the alkyl moieties is a $C_1$-$C_4$ alkyl group, a hydroxyethyl group or a hydroxypropyl group.

The self-crosslinkable polyurethanes obtained by using the polyalkylene polyamines as the chain extender are used advantageously in the present invention, and cationic, anionic and amphoteric species of these are used especially advantageously because they are self-emulsifiable and can be stably emulsified in water without using emulsifiers. The disclosures of the prior art references cited above with regard to the self-crosslinkable polyurethane and the disclosure of Japanese Patent Publication No. 40356/1977 describing amphoteric self-emulsifiable polyurethanes are cited herein as the disclosure of the present specification.

As required, the self-crosslinkable polyurethane used in this invention may be used as a mixture with a compound having an epoxy group, for example a compound having at least two glycidyl groups obtained by the reaction of a polyol with an epihalohydrin such as ethylene glycol diglycidyl ether, polyoxyethylene diglycidyl ether and trimethylolpropane triglycidyl ether, as disclosed in Japanese Laid-Open Patent Publications Nos. 73293/1978 and 73294/1978, for example, and also as a mixture with a compound having a methylol group or an alkoxy group, such as dimethylolurea, dimethoxymethylurea, trimethylolmelamine or trimethoxymethylmelamine as disclosed, for example, in Japanese Laid-Open Patent Publications Nos. 75296/1978 and 75297/1978. The disclosures of these four Japanese patent doucments are also cited herein as the disclosure of the present specification.

The self-crosslinkable polyurethane used in this invention is available, for example, as an emulsion sold under the trade names UE-296A and Softex U-100 (a product of Kao Soap Co., Ltd.). Preferably, UE-296A and Softex U-100 are used as a mixture, and good results can be obtained when the weight ratio (as solids) of UE-296A to Softex U-100 is from 90:10 to 40:60, particularly from 70:30 to 50:50.

The pulverulent surface-roughening substance used in the process of this invention is preferably a substantially water-insoluble inorganic or organic solid pulverulent substance. It should have an average particle diameter of not more than about 1 micron, preferably about 0.005 to 0.5 micron, especially preferably 0.01 to 0.3 micron.

Examples of the surface-roughening substance are fine powders of organic materials such as polyethylene, polytetrafluoroethylene, polyvinylidene fluoride, polyacrylonitrile and benzoguanamine resin, or fine powders of inorganic materials such as silica, alumina, titanium dioxide, kaolin, talc, graphite, calcium carbonate,

feldspar, molybdenum disulfide, carbon black and barium sulfate.

Preferably, the surface-roughening substance used in this invention has a specific gravity not exceeding 3.

The aqueous dispersion or emulsion composition used in this invention may, as required, contain a lubricant substance.

An easily slippable aromatic polyester film produced by the process of this invention using the above composition containing the lubricant substance generally has improved travelling durability and scratch resistance, especially the latter, over an easily slippable aromatic polyester film produced by the process of this invention using the above composition containing no lubricant substance.

Illustrative of the lubricant substance are polyorganosiloxanes, aliphatic carboxylic acids having at least 10 carbon atoms, esters, amides or salts of these carboxylic acids, aliphatic alcohols, and fluorine-containing surface-active agents. These lubricant substances do not necessarily have to be inert to the self-crosslinkable polyurethane, but preferably they are substantially inert to the self-crosslinkable polyurethane.

Compounds generally called silicones are advantageously used as the polyorganosloxanes. Preferably, they are composed mainly of strucural units of the following formula.

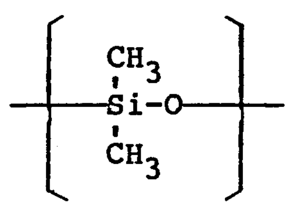

Polysiloxanes containing subsidiary strucutral units corresponding to ones resulting from substitution of the methyl groups of the above structural units by hydroxyl, alpha-methylstyrene, oxyalkylene, chlorophenyl, trifluoropropyl, epoxy, vinyl, carboxyl, phenyl, amino, cyanoethyl,

alpha-olefin, hydrogen, mercapto, haloalkyl, etc. may also be used. The polysiloxanes may have the aforesaid groups at the ends of the molecular chain.

Polydimethylsiloxanes having (or modified with) amino, hydroxy or epoxy groups are preferably used in this invention. These modified polysiloxanes have good compatibility with the self-crosslinkable polyurethane in the thin film-forming composition and render the composition stable.

In the present invention, preferred polysiloxanes have a viscosity at 25$^{o}$C of 10 to 100,000 centistokes, and a molecular weight of at least 5,000. The polysiloxane is used as an emulsion or dispersion in an aqueous medium, or obtained as an aqueous emulsion by the emulsion polymerization of the corresponding silane or siloxane.

The aliphatic carboxylic acids or the esters, amides or salts of these are based on aliphatic carboxylic acids having at least 10 carbon atoms, preferably 12 to 26 carbon atoms. The esters of these are esters of these carboxylic acids with aliphatic alcohols having 1 to 20 carbon atoms, preferably 4 to 14 carbon atoms. The aliphatic carboxylic acids are preferably aliphatic monocarboxylic acids. Examples of the aliphatic carboxylic acis or the esters, amides or salts thereof used as the lubricant substance include lauric acid, myristic acid, palmitic acid, stearic acid, oleic acid, behenic acid, montanic acid, butyl myristate, octyl myristate, butyl palmitate, octyl palmitate, butyl stearate, octyl stearate, stearyl stearate, lauramide, stearamide, sodium laurate, sodium stearate, calcium laurate and calcium stearate.

Lauryl alcohol and stearyl alcohol are examples of the aliphatic alcohols used as the lubricant substance.

Examples of the fluorine-containing surface-active agents are sodium salts of perfluoroalkylcarboxylic acids.

The polyorganisiloxanes are especially preferred

as the lubricant substance used in the process of this invention.

In the thin film-forming composition containing the self-crosslinkable polyurethane and the pulverulent surface-roughening substance and as required the lubricant substance, the weight ratio of the self-crosslinkable polyurethane to the pulverulent surface-roughening substance is preferably from 98:2 to 40:60, and the weight ratio of the self-crosslinkable polyurethane to the lubricant is preferably from 98:2 to 40:60, and the weight ratio of the self-crosslinkable polyurethane and the lubricant substance combined to the pulverulent surface-roughening substance is preferably in the range of from 98:2 to 40:60.

The thin film-forming composition has a solids concentration of preferably not more than 50% by weight, more preferably 1 to 30% by weight, especially preferably 2 to 20% by weight.

The thin film-forming composition has a viscosity at 20°C of preferably not more tahn about 200 centipoises, especially preferably 1 to 50 centipoises, and above all 1 to 20 centipoises.

As required, the thin film-forming composition may contain various additives such as antistatic agents, ultraviolet absorbers, and polymeric resin binders (e.g., polyethylene wax).

According to the process of this invention, the thin film-forming composition is applied in thin film form to at least one surface of the aromatic polyester film before the desired crystalline orientation is achieved. The thin film-forming composition is applied in an amount of preferably about 0.5 to about 20 g, especially preferably about 2 to about 10 g, per $m^2$ of the film surface.

Advantageously, the film surface to which the thin film-forming composition is applied is subjected to a corona discharge treatment in advance, or a surface-active

agent chemically inert to the thin film-forming composition is included in it. By so doing, the thin film-forming compoisition can be applied very smoothly, particularly by the in-line method.

Preferably, the surface-active agent is one which can reduce the surface tension of the composition to 40 dynes/cm or below, and includes, for example, polyoxyethylene alkyl phenyl ethers, polyoxyethylene-fatty acid esters, sorbitan fatty acid esters, glycerin fatty acid esters, fatty acid metal soaps, alkylsulfates, alkylsulfonates, alkylsulfosuccinate salts, quaternary ammonium chlorides, and alkylamine-hydrochlorides.

Application of the thin film-forming composition to the surface of the aromatic polyester film can be performed by a known method such as a reverse coating method, a kiss Meyer coating method, a gravure coating method, a slot die coating method or a curtain coating method.

For example, a slippable film in accordance with this invention which has a dual surface structure composed of a surface having a cured thin film with numerous minute protrusions and a smooth surface and which is particularly suitable as a material for magnetic tapes can be advantageously produced by the in-line method in which the thin film-forming composition is coated on a monoaxially stretched film, which has left a group of nip rollers and is travelling substantially horizontally, from below its undersurface by means of a roll coater by a reverse coating method.

According to the process of this invention, the film to which the thin film-forming composition has been applied is then stretched and heat-treated. As stated above, the film to which the thin film-forming composition is applied may be unstretched, monoaxially stretched or biaxially stretched. But after the application of the thin film-forming composition, it should be subjected at least to stretching and heat-treatment. By these operations, the

thin film-forming composition undergoes heating to evaporate water, and the self-crosslinkable polyurethane contained in it is crosslinked to form on the film surface a cured thin film having numerous minute protrusions.

In the process of this invention, the temperature of stretching before the application of the thin film-forming composition does not always need to be different from that of stretching after its application, and temperature schedules previously known for biaxial stretching of aromatic polyester films can be employed. Both of these stretching operations can be carried out at a temperature between the second order transition point (Tg) of the aromatic polyesfter and Tg + 70$^{o}$C. Stretching in the second direction is carried out in a direction at right angles to the first stretching. For example, when the film is first stretched in the machine direction, the second stretching is carried out in a direction at right angles to the machine direction. On the other hand, when a biaxially stretched film is to be further stretched, the stretching direction may be that used in the first or second stretching. For example, when the second stretching direction is at right angles to the machine direction of the film, the direction of stretching to be finally carried out may be the machine direction or a direction at right angles to it.

Preferably, in either case, the stretching is carried out such that the area ratio obtained by multiplying the stretch ratio in the machine direction by the stretch ratio in the direction substantially at right angles to it finally becomes about 6 to about 25.

When the thin film-forming composition is applied to an unstretched film, it is preferred to adjust the stretch ratio in the first stretching to about 2 to 5. When it is applied to a monoaxially stretched film, it is preferable to stretch it at a ratio of about 2 to 5 in a direction substantially at right angles to the stretching direction of the first stretching. On the other hand, when

it is applied to a biaxially stretched film, it is desirable to stretch it again to about 1.5 to 2.5 times so that the total stretch ratio in the direction of the further stretching becomes about 2 to about 5.

The heat-treatment is carried out at a temperature between a temperature about 30°C higher than the stretching temperature of the final stretching of the aromatic polyester film and the melting point of the aromatic polyester, for example at a temperature between about 150°C and about 240°C, for a period of about 1 to about 100 seconds.

The thickness of the biaxially oriented film is 3 to 100 microns, preferably 4 to 50 microns, especially preferably 8 to 25 microns.

The biaxially oriented film has on at least one surface thereof a thin film having numerous minute protrusions preferably corresponding to about 0.001 to about 1 g per $m^2$ of the film surface to which the thin film-forming composition has been applied.

Thus, according to this invention, there is provided an easily slippable aromatic polyester film, said film being a crystallographically oriented aromatic polyester film having a thin film with numerous minute protrusions on at least one surface thereof, said thin film being composed of a crosslinked (cured) product of a self-crosslinkable polyurethane containing a pulverulent surface-roughening substance having an average particle diameter of not more than about 1 micron and as required, a lubricant substance.

The polyester film portion of the easily slippable polyester film of this invention is crystallized to such an extent that it has a heat of crystal fusion, measured for example, by a scanning calorimeter in a nitrogen stream at a temperature elevating rate of 10°C/min., of at least about 4 cal/g.

In the present invention, the aromatic polyester

is a substantially linear crystalline saturated polyester synthesized by polycondensation from an aromatic dibasic acid or its ester-forming derivative and a diol or its ester-forming derivative. Typical examples are polyethylene terephthalate, poly(1,4-cyclohexylene dimethylene terephthalate), polyethylene isophthalate, polybutylene terephthalate and polyethylene-2,6-naphthalenedicarboxylate. Copolymers resulting from substitution of a part of the acid component or glycol commponent of the above homopolymers by another acid or glycol component, or blends of such homopolymers or copolymers with a minor proportion of other resins may also be used if they are crystalline.

Polyethylene terephthalate is especially preferred as the aromatic polyester in this invention.

The film of this invention has a low coefficient of friction during travelling, and its operability is very good. As a base film of a magnetic tape it has good durability and its shaving is very little when in frictional contact with the travelling portions of magnetic recording and playback devices.

Furthermore, during film formation, the biaxially oriented polyester film of this invention has good windability, and winding creases scarcely form. In addition, it can be cut sharp with dimensional stability in a slitting operation.

Because of the aforesaid advantages of the film of this invention both as a film product and during film formation, it is very useful in magnetic applications, and can be produced easily and stably. The film of this invention is particularly suitable as a base film of high grade magnetic recording media such as micro-recording materials, floppy discs, ultrathin high-density magnetic recording films for long-hour recording in audio and video applications, and magnetic recording films for recording and playback of high-quality images.

Accordingly, the present invention preferably

provides a magnetic recording film or tape composed the easily slippable aromatic polyester film of the invention having a thin film with numerous minute protrusions only on one surface thereof and a magnetic recording layer formed on the other surface.

Magnetic layers and methods for forming them on base films are well known, and can also be used in this invention.

For example, when a magnetic layer is formed on the base film by coating a magnetic paint, there can be used a ferromagnetic powder such as gamma-$Fe_2O_3$, Co-containing gamma-$Fe_2O_3$, $Fe_3O_4$, Co-containilng $Fe_3O_4$, $CrO_2$, and barium ferrite in the magnetic paint. Known thermoplastic resins, thermosetting rsins, reactive resins or mixtures of these may be used as a binder together with such a magnetic powder. Specific examples of such resins are a vinyl chloride/vinyl acetate copolymer and a polyurethane elastomer.

The magnetic paint may further include a polishing agent such as alpha-alumina, a conductivity imparting agent such as carbon black, a dispersant such as lecithin, a lubricant such as n-butyl stearate or lecithinic acid, a curing agent such as an epoxy resin, and a solvent such as methyl ethyl ketone, methyl isobutyl ketone and toluene.

When the magnetic layer is to be formed by depositing a thin metal film on the base film, there can, for example, be used a vacuum depositing method, a sputtering method, an ion plating method, a chemical vapor deposition method (CVD), and an electroless plating method. Useful metals include, for example, iron, cobalt, nickel and their alloys such as Co-Ni-P alloy, Co-Ni-Fe alloy, Co-Cr alloy or Co-Ni alloy.

The various values in the present specification are measured and defined as follows:-

(1) PV value

A surface-roughened film sample was subjected to

a needle-contacting surface roughness tester (SURFCOM 3B made by Tokyo Seimitsu Co., Ltd.) to draw a chart (film surface roughenss curve) under a load of 0.19 g with a needle radius of 2 microns. With regard to a standard film length of 26 mm, the size of the film was enlarged to 50 times in the direction of its standard length and to 20,000 times in the surface roughness direction in preparing the chart as above. A portion corresponding to the standard length was picked up from the curve, and a line parallel to the average line is drawn to the summit of a mountain which is most remote from the average line, and a line parallel to the average line is drawn to a valley which is deepest from the average line. The distance between the two parallel lines is determined, and divided by the longitudinal multiplication. The quotient is expressed in microns and defined as the PV value (an average of 10 replicates).

(2) $R_{CLA}$ value

A film surface roughness curve was drawn by the same device as in (1). A portion having a measured length L (standard length 2 mm) was picked up from the film surface roughenss curve in the direction of its center line. The center line of this portion is assumed to be X axis and the direction of the longitudinal multiplication, Y axis, and the roughness curves is expressed as Y=f(x). The $R_{CLA}$ (in microns) is given by the following equation.

$$R_{CLA} = \frac{1}{L}\int_{O}^{L} |f(x)|\,dx$$

The measurement was done on eight samples. The three largest values were excluded, and the average of the remaining five measured values was calculated, and defined as $R_{CLA}$. The above measurement was done both in the longitudinal and transverse directions of the film, and the average of these was determined.

(3) Coefficient of dynamic friction (travelling property)

Measured in the following manner by using the device shown in Figure 1 (Model NJS101 supplied by Japan Automatic Control Co., Ltd.). In Figure 1, the reference numeral 1 represents a pay-off reel; 2, a tension controller; 3, 4, 6, 8, 9 and 11, free rollers; 5, a tension detector (inlet); 7, a chrome-plated fixed pin (diameter 5 mm); 10, a tension detector (outlet); 12, a guide roller; and 13, a take-up reel. The sample film was passed through the device shown in Figure 1 in an atmosphere kept at 20°C and 60% RH so that the film surface contacted the fixed pin having an outside diameter of 5 mm at an angle of $(152/180)\pi$ radian, and moved in frictional contact therewith at a rate of 3.3 cm/sec. The outlet tension $T_2$ was determined when the tension controller 2 was adjusted so that the inlet tension became 30 g. The coefficient of dynamic friction, $\mu k$, was calculated in accordance with the following equation.

$$\mu k = 0.868 \log \frac{T_2}{30}$$

The length of the film which ranges from the roll 1 to the roll 13 in the above device is defined as the unit length of the film. A cycle consisting of moving the film over its unit length from the roll 1 to the roll 13 under tension and then returning it from roll 13 to the roll 1 over its unit length under no tension was repeated 100 times (100 passes), and the $\mu k$ of the 100th cycle is expressed as the coefficient of dynamic friction.

(3) Abrasion

After the 100 passes mentioned in (2) above, the device was observed to determine whether there was a substance which deposited on the fixed pin 7. The result was evaluated on a scale of the following grades.

○ : Scarcely any deposit was noted.

△ : There was a sign of some deposit.

X : Much deposit was observed.

(4) Scratch resistance

The worn condition (the degree of occurrence of scratches) of the surface of the film which was passed through 100 cycles over the fixed pin was observed. The result was evaluated on a scale of the following grades.

○ : Scarcely any scratches was observed.

△ : Some scratches occurred.

X : Considerable scratches occurred.

(5) Coefficent of friction of the film

By means of a slipperiness measuring instrument made by Toyo Tester Co., Ltd., the coefficient of friction between the thin film surface and the base surface of the polyester film which did not have the thin film layer was measured.

The following examples illustrate the present invention.

<u>Comparative Example 1</u>

Polyethylene terephthalate (the heat of crystal fusion 9.8 cal/g) having an intrinsic viscosity, measured in ortho-chlorophenol at 25$^{o}$C, of 0.62 and containing no inorganic filler was extruded by an extruder onto a drum cooled at 40$^{o}$C while applying an electrostatic charge, to form an extruded film having a thickness of 152 microns. The film was then stretched to 3.6 times in the longitudinal direction on a metallic roll heated at 93$^{o}$C.

The stretched film was introduced into a tenter, passed through a preheating zone at 98$^{o}$C and stretched to 3.9 times in the transverse direction at 105$^{o}$C. It was then heat-set at 225$^{o}$C for 6.3 seconds to complete its crystalline orientation. The film was wound up under a wind-up tension of 9.8 kg with a width of 500 mm while slitting its edge. Finally, the film had an average thickness of 12.1 microns.

Since slippage between film portions was poor, a crease formed in the wound roll of the film (mill roll). Once the crease formed, it propagated to the surface layer to develop a poor wound state in which one end of the film roll was hard but its central portion was soft.

Separately, the film was wound up at an extremely decreased tension of 4.68 kg, the end portions of the film roll became non-uniform and winding creases were also observed. An attempt to micro-slit this film to a width of 1/2 inch failed.

The results are shown in Table 1.

Example 1

Fifty-three parts by weight (as solids) of a 30% by weight self-emulsified emulsion of self-crosslinkable polyurethane (UE-296A, hard type, a product of Kao Soap Co., Ltd.), 35 parts by weight (as solids) of a 10% by weight self-emulsified emulsion of self-crosslinkable polyurethane (Softex U-100, soft type, a product of Kao Soap Co., Ltd.), 10 parts by weight (as solids) of a 19% by weight aqueous dispersion of colloidal silica (average particle diameter 0.04 to 0.05 micron), and 2 parts by weight of polyoxyethylene nonyl phenyl ether (HLB=12.8; NS 208.5, a product of Nippon Oils and Fats Co., Ltd.) were fully mixed first by a homogenizer and then by an ultrasonic disperser. The coating composition was diluted with deionized water to form a coating solution having a total solids concentration of 9%.

Then, in the process of Comparative Example 1, at a position immediately before the monoaxially stretched (longitudinally stretched) film entered the tenter, the above coating solution was uniformly applied to one surface of the film from a coater head composed of three rolls.

The amount of the coating solution applied was adjusted to about 4 g per $m^2$ of the monoaxially stretched film (this amount corresponded to about 0.092 g as solids per $m^2$ of the biaxially stretched film described below).

The monoaxially stretched film having one surface so coated was introduced into the tenter, passed through a preheating zone at 98°C, and stretched to 3.9 times at 105°C in the transverse direction, and then heat-set at 225°C for 6.3 seconds (the time during which the coated film underwent heating was 11 seconds in total).

The biaxially stretched and heat-set film could be wound up at a tension of 9.8 kg without the formation of creases. The film was microslit to a width of 1/2 inch, and fifty-two tapes each in a 500 m roll were produced. During this time, slitting of the film could be carried out without any trouble.

The surface properties, the running properties, etc. of the film of this invention are shown in Table 1.

It is clear by comparison with the film obtained in Comparative Example 1 (the above coating solution was not applied) that the film obtained in this Example had very good basic properties as a base film for magnetic tapes.

Aluminum was vapor-deposited on the treated surface of the film, and the surface was observed under a differential interference microscope at a magnification of 400. It could be confirmed that numerous minute protrusions were formed on the film surface.

## Comparative Example 2

The same coating solution as prepared in Example 1 was coated on one surface of the biaxially stretched film obtained under the film-forming conditions described in Comparative Example 1, at a rate of about 1 $g/m^2$ (wet) and about 4 $g/m^2$ (wet) respectively by using a Meyer bar, pre-dried at 100°C for 1 minute and then heat-treated at about 225°C for 10 seconds while the film was tightly fixed by surrounding it with a wooden frame. Then, aluminum was vapor-deposited on the coated surface, and the surface was observed under a differential inteference microscope at a magnification of 400. Scarcely any minute

protrusions formed on the surface, and the surface remained substantially flat. On the other hand, the treated surface and the non-treated surface had a coefficient of static friction and a coefficnet of dynamic friction in the range of 0.5 to 0.6. The coating was effective but the result was not outstandingly superior.

Comparative Example 3

Fifty-three parts by weight (as solids) of a 40% self-emulsified emulsion of a non-self-crosslinkable anionic polyurethane (formed by using an aliphatic polyester), 10 parts by weight (as solids) of an aqueous dispersion of colloidal silica (average particle diameter 0.04 to 0.05 micron) and 2 parts by weight of polyoxyethylene nonyl phenyl ether (NS208.5, a trade name for a product of Nippon Oils and Fats, Co., Ltd.) were mixed in the same way as in Example 1 to form a coating solution having a total solids concentration of 9%.

A biaxially stretched film was produced in the same way as in Example 1 using the resulting coating solution.

The same phenomenon as in Comparative Example 1 was observed. Slippage between film portions was poor, and creases formed. When the amount of silica was increased to 30 parts by weight (as solids), the windability of the film was somewhat improved, but the formation of winding creases could not be avoided. Slipperiness was poor in a travelling test on a tape having a width of 1/2 inch.

Example 2

Twenty-nine parts by weight (as solids) of a 30% self-emulsified emulsion of self-crosslinkable polyurethane (UE-296A, a trade name for a product of Kao Soap Co., Ltd.), 19 parts by weight (as solids) of a 10% by weight self-emulsified emulsion of self-crosslinkable polyurethane (Softex U-100, a trade name for a product of Kao Soap Co., Ltd.), 48 parts by weight (as solids) of an aqueous

dispersion of colloidal silica (average particle diameter of 0.012 to 0.015 micron) and 4 parts by weight of polyoxyethylene nonyl phenyl ether (HLB=12.8; NS208.5, a trade name for a product of Nippon Oils and Fats Co., Ltd.) were mixed in the same way as in Example 1 to form a coating solution having a total solids concentration of 5%.

A biaxially stretched film was produced by using the resulting coating solution in the same way as in Example 1 except that the amount of the coating solution applied on the monoaxially stretched film was about 2.5 $g/m^2$ (wet: corresponding to about 0.032 $g/m^2$ dry in the biaxially stretched film).

The film could be wound up well as in Example 1, and no trouble occurred in the slitting operation.

The surface properties, travelling properties, etc. of the film obtained in this Example are shown in Table 1.

Example 3

Fifty-one parts by weight (as solids) of a 30% self-emulsified emulsion of self-crosslinkable polyurethane (UE-296A, a trade name for a product of Kao Soap Co., Ltd.), 34 parts by weight (as solids) of a 10% by weight self-emulsified emulsion of self-crosslinkable polyurethane (Softex U-100, a trade name for a product of Kao Soap Co., Ltd.), 9 parts by weight (as solids) of an aqueous dispersion of colloidal silica (average particle diameter 0.04 to 0.05 micron), 5 parts by weight (as solids) of polyethylene wax emulsion (m.p. about 110°C), and 1 part by weight of polyoxyethylene nonyl phenyl ether (HLB=12.8; NS208.5, a trade name for a product of Nippon Oils and Fats Co., Ltd.) were mixed in the same way as in Example 1 to form a coating solution having a total solids concentration of 9%.

A biaxially stretched film was produced by using the resulting coating solution in the same way as in Example 1. The film could be wound up well, and no trouble occurred in slitting.

The surface properties and travelling properties of the film obtained in this Example are shown in Table 1.

Example 4

Fifty parts (as solids) of a 30% by weight self-emulsified emulsion of self-crosslinkable polyurethane (UE-296A, a trade name for a product of Kao Soap Co., Ltd.), 5 parts by weight (as solids) of a water-soluble epoxy compound (UE-296B, a trade name for a product of Kao Soap Co., Ltd.), 33 parts by weight (as solids) of a 10% self-emulsified emulsion of self-crosslinkablke polyurethane (Softex U-100, a trade name for a product of Kao Soap Co., Ltd.), 10 parts by weight of polytetrafluoroethylene (Lubron L-2, a trade name for a product of Daikin Industry Co., Ltd; average particle diameter about 0.2 micron) and 2 parts by weight of a nonionic surface-active agent (NS208.5, a trade name for a product of Nippon Oils and Fats Co., Ltd.) were mixed in the same way as in Example 1 to form a coating solution having a total solids concentration of 16%.

Then, in the process of Comparative Example 1, at a position immediately before the monoaxially stretched (longitudinally stretched) film entered the tenter, the above coating solution was uniformly applied to one surface of the film from a coater head composed of three rolls.

The amount of the coating solution applied was adjusted to about 7 g per $m^2$ of the monoaxially stretched film (wet; this amount corresponded to about 0.287 g dry per $m^2$ of the biaxially stretched film described below). The monoaxially stretched film having one surface so coated was introduced into the tenter, passed through a preheating zone at 98°C, and stretched to 3.9 times at 105°C in the transverse direction, and then heat-set at 235°C for 10 seconds (the time during which the coated film underwent heating was 20 seconds in total).

The biaxially stretched and heat-set film could be wound up well at a tension of 9.8 kg, and no trouble

occurred during its slitting.

The surface properties, the running properties, etc. of the film obtained in this Example are shown in Table 1.

Table 1

| Items of evaluation | Example 1 | | Example 2 | | Example 3 | | Example 4 | | Comparative Example 1 |
|---|---|---|---|---|---|---|---|---|---|
| | Treated surface | Non-treated surface | Treated surface | Non-treated surface | Treated suface | Non-treated surface | Treated surface | Non-treated surface | (uncoated) |
| Microslitting operability | Good | | Good | | Good | | Good | | Slitting impossible because of a poor roll mill |
| PV value | 0.110 | 0.098 | 0.177 | 0.098 | 0.281 | 0.098 | 0.050 | 0.098 | 0.098 |
| $R_{CLA}$ value | 0.008 | 0.007 | 0.016 | 0.007 | 0.014 | 0.007 | 0.018 | 0.007 | 0.007 (both surfaces) |
| Slipperiness μs (static) μd (dynamic) | 0.23<br>0.27 | | 0.20<br>0.25 | | 0.13<br>0.20 | | 0.22<br>0.26 | | Too large to be measured |
| Travelling property (coefficient of dynamic friction, μk) | 0.26 | | 0.23 | | 0.20 | | 0.22 | | A sample could not be obtained because of the failure of slitting. |
| Abrasion | ○ | | ○ | | ○ | | ○ | | A sample could not be obtained, and measurement impossible. |
| Scratch resistance | △ | | △ | | △ | | ○~△ | | Ditto |

Example 5

Forty-five parts by weight (as solids) of a 30% by weight self-emulsified emulsion of self-crosslinkable polyurethane (UE-296A, hard type, a trade name for a product of Kao Soap Co., Ltd.), 30 parts by weight (as solids) of a 10% by weight self-emulsified emulsion of self-crosslinkable polyurethane (Softex U-100, soft type, a trade name for a product of Kao Soap Co., Ltd.), 10 parts by weight (as solids) of a 20% by weight emulsion of amino-modified silicone, 10 parts by weight (as solids) of a 19% by weight aqueous dispersion of colloidal silica (average particle diameter of 0.04 to 0.05 micron) and 5 parts by weight of polyoxyethylene nonyl phenyl ether (HLB=12.8; NS208.5, a trade name for a product of Nippon Oils and Fats Co., Ltd.) were mixed in the same way as in Exammple 1 to form a coating solution having a total solids concentration of 9%.

Then, in the process of Comparative Example 1, at a position immediately before the monoaxially stretched (longitudinally stretched) film entered the tenter, the above coating solution was uniformly applied to one surface of the film from a coater head composed of three rolls.

The amount of the caoting solution applied was adjusted to about 4 g per $m^2$ of the monoaxially stretched film (this amount corresponded to about 0.092 g as solids per $m^2$ of the biaxially stretched film described below). The monoaxially stretched film having one surface so coated was introduced into the tenter, passed through a preheating zone at 98$^oC$, and stretched to 3.9 times at 105$^oC$ in the transverse direction, and then heat-set at 225$^oC$ for 6.3 seconds (the time during which the coated film underwent heating was 11 seconds in total).

The biaxially stretched and heat-set film could be wound up at a tension of 9.8 kg without the formation of creases. The film was microslit to a width of 1/2 inch, and fifty-two tapes each in a 500 m roll were produced.

During this time, slitting of the film could be carried out without any trouble.

The surface properties, the running properties, etc. of the film of this Example are shown in Table 2.

It is clear by comparison with the film obtained in Comparative Example 1 (the above coating solution was not applied) that the film obtained in this Example had very good basic properties as a base film for magnetic tapes.

Aluminum was vapor-deposited on the treated surface of the film, and the surface was observed under a differential interference microscope at a magnification of 400. It could be confirmed that numerous minute protrusions were formed on the film surface.

## Comparative Example 4

The same coating solution as prepared in Example 5 was coated on one surface of the biaxially stretched film obtained under the film-forming conditions described in Comparative Example 1, at a rate of about 1 g/m$^2$ (wet) and about 4 g/m$^2$ (wet) respectively by using a Meyer bar, pre-dried at 100$^\circ$C for 1 minute and then heat-treated at about 225$^\circ$C for 10 seconds while the film was tightly fixed by surrounding it with a wooden frame. Then, aluminum was vapor-deposited on the coated surface, and the surface was observed under a differential inteference microscope at a magnification of 400. Scarcely any minute protrusions formed on the surface, and the surface remained substantially flat. On the other hand, the treated surface and the non-treated surface had a coefficient of static friction and a coefficnet of dynamic friction in the range of 0.5 to 0.7. The coating was effective but the result was not outstandingly superior.

## Comparative Example 5

Seventy-five parts by weight (as solids) of a 40% self-emulsified emulsion of a non-self-crosslinkable anionic polyurethane (obtained by using an aliphatic

polyester), 10 parts by weight (as solids) of a 20 wt.% emulsion of amino-modified silicone, 10 parts by weight (as solids) of an aqueous dispersion of colloidal silica (average particle diameter 0.04 to 0.05 micron) and 5 parts by weight of polyoxyethylene nonyl phenyl ether (NS208.5, a trade name for a product of Nippon Oils and Fats, Co., Ltd.) were mixed in the same way as in Example 5 to form a coating solution having a total solids concentration of 9%.

A biaxially stretched film was produced in the same way as in Example 5 using the resulting coating solution.

The same phenomenon as in Comparative Example 4 was observed. Slippage between film portions was poor, and creases formed. When the amount of silica was increased to 30 parts by weight (as solids), the windability of the film was somewhat improved, but the formation of winding creases could not be avoided. Slipperiness was poor in a travelling test on a tape having a width of 1/2 inch.

## Example 6

Twenty-six parts by weight (as solids) of a 30% by weight self-emulsified emulsion of self-crosslinkable polyurethane (UE-296A, a trade name for a product of Kao Soap Co., Ltd.), 17 parts by weight (as solids) of a 10% by weight self-emulsified emulsion of self-crosslinkable polyurethane (Softex U-100, a trade name for a product of Kao Soap Co., Ltd.), 9 parts by weight (as solids) of a 30% by weihgt emulsion of an epoxy-modified silicone, 43 parts by weight (as solids) of an aqueous dispersion of colloidal silica (average particle diameter of 0.012 to 0.015 micron) and 5 parts by weight of polyoxyethylene nonyl phenyl ether (HLB=12.8; NS208.5, a trade name for a product of Nippon Oils and Fats Co., Ltd.) were mixed in the same way as in Example 5 to form a coating solution having a total solids concentration of 5%.

A biaxially stretched film was produced by using

the resulting coating solution in the same way as in Example 5 except that the amount of the coating solution applied on the monoaxially stretched film was about 2.5 $g/m^2$ (wet: corresponding to about 0.032 $g/m^2$ dry in the biaxially stretched film).

The film could be wound up well as in Example 5, and no trouble occurred in the slitting operation.

The surface properties, travelling properties of the film, etc. obtained in this Example are shown in Table 2.

Example 7

Forty-two parts by weight (as solids) of a 30% by weight self-emulsified emulsion of self-crosslinkable polyurethane (UE-296A, a trade name for a product of Kao Soap Co., Ltd.), 28 parts by weight (as solids) of a 10% by weight self-emulsified emulsion of self-crosslinkable polyurethane (Softex U-100, a trade name for a product of Kao Soap Co., Ltd.), 10 parts by weight (as solids) of a 40% by weight emulsion of a hydroxy-modified silicone, 5 parts by weight (as solids) of a 25% by weight emulsion of isooctyl myristate, 10 parts by weight (as solids) of an aqueous dispersion of colloidal silica (average particle diameter 0.04 to 0.05 micron) and 5 parts by weight of polyoxyethylene nonyl phenyl ether (HLB=12.8; NS208.5, a trade name for a product of Nippon Oils and Fats Co., Ltd.) were mixed in the same way as in Example 1 to form a coating solution having a total solids concenration of 9%.

A biaxially stretched film was produced by using the resulting coating solution in the same way as in Example 1. The film could be wound up well, and no trouble occurred in slitting.

The surface properties, the travelling properties, etc. of the film obtained in this Example are shown in Table 2.

Example 8

Forty-five parts (as solids) of a 30% by weight

self-emulsified emulsion of self-crosslinkable polyurethane (UE-296A, a trade name for a product of Kao Soap Co., Ltd.), 30 parts by weight (as solids) of a 10% by weight self-emulsified emulsion of self-crosslinkable polyurethane (Softex U-100, a trade name for a product of Kao Soap Co., Ltd.), 10 parts by weight (as solids) of a 30% by weight emulsion of an epoxy-modified silicone, 10 parts by weight of polytetrafluoroethylene (Lubron L-2, a trade name for a product of Daikin Industry Co., Ltd.; average particle diameter 0.2 micron) and 5 parts by weight of a nonionic surface active agent (NS208.5, a trade name for a product of Nippon Oils and Fats Co., Ltd.) were mixed in the same way as in Example 5 to prepare a caoting solution having a total solids concentration of 16%.

Then, in the process of Comparative Example 1, at a position immediately before the monoaxially stretched (longitudinally stretched) film entered the tenter, the above coating solution was uniformly applied to one surface of the film from a coater head composed of three rolls.

The amount of the coating solution applied was adjusted to about 7 g per $m^2$ of the monoaxially stretched film (wet; this amount corresponded to about 0.287 g dry per $m^2$ of the biaxially stretched film described below). The monoaxially stretched film having one surface so coated was introduced into the tenter, passed through a preheating zone at 98°C, and stretched to 3.9 times at 105°C in the transverse direction, and then heat-set at 235°C for 10 seconds (the time during which the coated film underwent heating was 20 seconds in total).

The biaxially stretched and heat-set film could be wound up well, and no trouble occurred during its slitting.

The surface properties, the travelling properties, etc. of the film obtained in this Example are shown in Table 2.

Table 2

| Items of evaluation | Example 5 | | Example 6 | | Example 7 | | Example 8 | | Comparative Example 1 |
|---|---|---|---|---|---|---|---|---|---|
| | Treated surface | Non-treated surface | Treated surface | Non-treated surface | Treated suface | Non-treated surface | Treated surface | Non-treated surface | (uncoated) |
| Microslitting operability | Good | | Good | | Good | | Good | | Slitting impossible because of a poor roll mill |
| $R_{CLA}$ value | 0.000 | 0.007 | 0.011 | 0.007 | 0.010 | 0.007 | 0.016 | 0.007 | 0.007 (both surfaces) |
| Slipperiness μs (static) μd (dynamic) | 0.30<br>0.37 | | 0.25<br>0.30 | | 0.30<br>0.35 | | 0.26<br>0.30 | | Too large to be measured |
| Travelling property (coefficient of dynamic friction, μk) | 0.23 | | 0.22 | | 0.19 | | 0.20 | | A sample could not be obtained because of the failure of slitting. |
| Abrasion | ○ | | ○ | | ○ | | ○ | | A sample could not be obtained, and measurement impossible. |
| Scratch resistance | ○ | | ○ | | ○ | | ○ | | Ditto |

Example 9

A magnetic coating composition having the formulation shown below was coated by a gravure roll on the non-treated surface of the easily slippable biaxially oriented polyester film obtained in Example 5. The magnetic layer was smoothed by a doctor knife, and magnetically oriented in a customary manner while the magnetic coating composition applied was still wet. The coated film was introduced into an oven, and dired and cured. The product was calendered to form a uniform coated surface. Thus, a tape, 1/2 inch wide, having a magnetic layer with a thickness of about 4 microns formed on it was prepared. During the above processing steps, no trouble occurred, and the travelling durability (abrasion and scratch resistance) of the slippery surface was good.

Formulation of the magnetic coating solution (parts by weight)

| | |
|---|---|
| Needle-like Fe particles (average long diameter 0.4 micron; specific surface area about 40 $m^2/g$) | 100 |
| SLEC A (vinyl chloride/vinyl acetate copolymer produced by Sekisui Chemikcal Co., Ltd.) | 10 |
| Nippollan 2304 (polyurethane elastomer produced by Nippon Polyurethane Industry Co., Ltd.) | 10 |
| Coronate L (polyisocyanate produced by Nippon Polyurethane Industry Co., Ltd.) | 5 |
| Lecithin | 2 |
| Silicone resin (lubricant) | 1 |
| Methyl ethyl ketone | 75 |
| Methyl isobutyl ketone | 75 |
| Toluene | 75 |

CLAIMS

1. A process for producing an easily slippable film of an aromatic polyester, which comprises applying a thin film of an aqueous dispersion or emulsion composition containing a self-crosslinkable polyurethane, a pulverulent surface-roughening substance having an average particle diameter of not more than 1 μm and optionally a lubricant to at least one surface of an aromatic polyester film before the desired crystalline orientation of the polyester film is achieved, thereafter stretching and heat-treating the aromatic polyester having said thin film thereon to impart the desired crystalline orientation to the aromatic polyester film and to crosslink the self-crosslinkable polyurethane in the composition, thereby to form a cured thin film having numerous minute protrusions on at least one surface of the crystalline-oriented aromatic polyester film.

2. A process according to claim 1 wherein the self-crosslinkable polyurethane is self-emulsifiable and cationic.

3. A process according to claim 1 or 2 wherein the self-crosslinkable polyurethane is a polyurethane containing a primary or secondary amino group and a group of the following formula

$$-CH_2CH(OH)CH_2X$$

wherein X represents a halogen atom,

or a polyurethane containing said groups in which the amino group is cationized with an acid.

4. A process according to claim 1, 2 or 3 wherein the pulverulent surface-roughening substance is a substantially water-insoluble inorganic or organic substance in the form of solid fine particles.

5. A process according to any one of the preceding claims wherein the pulverulent surface-roughening substance has an average particle diameter of 0.005 to 0.5 µm.

6. A process according to any one of the preceding claims which contains a lubricant which is substantially inert to the self-crosslinkable polyurethane.

7. A process according to any one of the preceding claims wherein the lubricant is a polyorganosiloxane, an aliphatic carboxylic acid having at least 10 carbon atoms, or an ester of said carboxylic acid.

8. A process according to any one of the preceding claims wherein, in the aqueous dispersion or emulsion composition, the weight ratio of the self-crosslinkable polyurethane to the pulverulent surface-roughening substance is from 98:2 to 40:60.

9. A process according to any one of the preceding claims wherein the aqueous dispersion or emulsion composition contains a lubricant, the weight ratio of the self-crosslinkable polyurethane to the lubricant is from 98:2 to 40:60, and the weight ratio of the self-crosslinkable polyurethane and the lubricant combined to the pulverulent surface-roughening substance is from 98:2 to 40:60.

10. A process according to any one of the preceding claims wherein the aqueous dispersion or emulsion composition has a solids concentration of not more than 50% by weight.

11. A process according to any one of the preceding claims wherein the aqueous dispersion or emulsion composition has a viscosity at 20°C of not more than 0.2 Pas (200 centipoises).

12. A process according to any one of the preceding claims wherein the aqueous dispersion or emulsion composition is applied to the aromatic polyester film, which has not yet attained the desired crystalline orientation, in an amount of 0.5 to 20 g per $m^2$ of the film surface.

13. A process according to any one of the preceding claims wherein the aqueous dispersion or emulsion composition is

applied in thin film form to at least one surface of an unstretched film of the aromatic polyester and then the film is biaxially stretched simultaneously or successively.

14. A process according to any one of claims 1 to 12 wherein the aqueous dispersion or emulsion composition is applied in thin film form to at least one surface of a monoaxially stretched film of the aromatic polyester, and then the film is stretched in a direction substantially at right angles to the direction of the monoaxial stretching.

15. A process according to any one of claims 1 to 12 wherein the aqueous dispersion or emulsion composition is applied in thin film form to at least one surface of a biaxially stretched film of the aromatic polyester which has not attained the desired crystalline orientation, and thereafter the film is stretched in at least one direction to give the desired crystalline orientation.

16. A process according to any one of the preceding claims wherein the stretching is carried out so that the area ratio obtained by multiplying the stretch ratio in the machine direction by the stretch ratio in a direction substantially at right angles to it finally becomes 6 to 25.

17. A process according to claim 14 or 16 wherein the monoaxially oriented aromatic polyester film to which the aqueous dispersion or emulsion composition has been applied in thin film form is stretched to 2 to 5 times in a direction substantially at right angles to said stretching direction.

18. A process according to claim 15 or 16 wherein the biaxially stretched aromatic polyester film to which the aqueous dispersion or emulsion composition has been applied in thin film form and which has not attained the desired crystalline orientation is stretched in at least one direction to 1.5 to 2.5 times.

19. A process according to any one of the preceding claims wherein the heat-treatment is carried out at a temperature of 150 to 240°C for 1 to 100 seconds.

20. A process according to any one of the preceding claims wherein the thin film having numerous minute protrusions corresponding to 0.001 to 1 g per $m^2$ of the film surface to which it has been applied is formed on at least one surface of the aromatic polyester film to which the desired crystalline orientation has been imparted.

21. A process according to any one of the preceding claims wherein the aromatic polyester is polyethylene terephthalate.

22. An easily slippable aromatic polyester film, said film being a crystalline oriented aromatic polyester film having a thin film with numerous minute protrusions on at least one surface thereof, said thin film being composed of a crosslinked product of a self-crosslinkable polyurethane containing a pulverulent surface-roughening substance having an average particle diameter of not more than 1 um and optionally a lubricant substance.

23. A magnetic recording film or tape composed of the easily slippable aromatic polyester film as claimed in claim 22 having the thin film with numerous minute protrusions on at least one surface and a magnetic layer formed on the other surface of the film.

FIG. 1

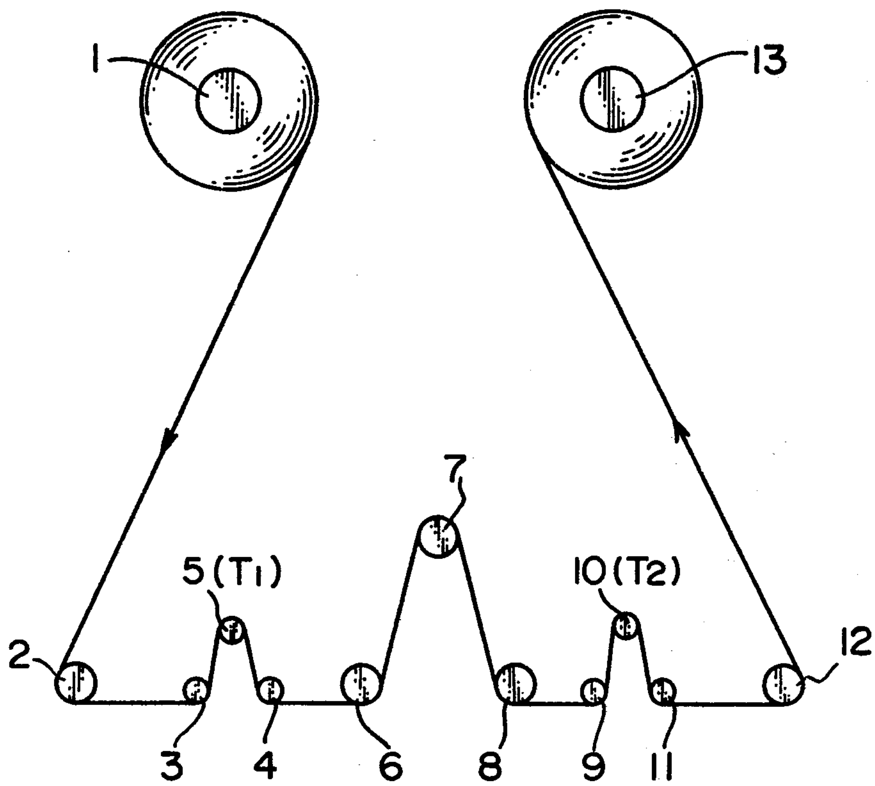

European Patent Office

# EUROPEAN SEARCH REPORT

0135982

Application number

EP 84 30 4021

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | DE-A-3 203 216 (FUJI PHOTO FILM) * Claims; example "Bindermasse A", test 1 * | 22,23 | C 08 J 7/04<br>C 08 J 5/18<br>G 11 B 5/704<br>C 09 D 3/72 |
| Y | | 1 | |
| | --- | | |
| Y | GB-A-2 079 182 (TEIJIN) * Claim 1; page 2, lines 44-51; page 2, lines 57-65; page 3, lines 15-21; example 1c * | 1 | |
| | --- | | |
| A | DE-A-3 222 777 (TDK ELECTRONICS) * Claims; page 4, line 26 - page 5, line 10; page 5, line 16 - page 7, line 12 * | 6,7 | **TECHNICAL FIELDS SEARCHED (Int. Cl.4)** |
| | --- | | |
| A | FR-A-2 483 663 (SONY CORP. et al.) * Claim 1; page 2, line 19 - page 3, line 39 * | 6,7 | C 08 J<br>G 11 B |
| | ----- | | |

The present search report has been drawn up for all claims

| Place of search | Date of completion of the search | Examiner |
|---|---|---|
| THE HAGUE | 16-11-1984 | HALLEMEESCH A.D. |

**CATEGORY OF CITED DOCUMENTS**

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82